# EUROPEAN PATENT SPECIFICATION

(11) **EP 1 192 311 B1**
(45) Date of publication and mention of the grant of the patent: **03.09.2003**
(21) Application number: 00936828.3
(22) Date of filing: 26.05.2000
(51) Int. Cl.: D21C 3/28, D21C 5/02, B01D 19/04

(54) **USE OR A FOAM-CONTROLLING AGENT**
VERWENDUNG EINES SCHAUMKONTROLLIERENDE MITTELS
UTILISATION D'UN AGENT DE CONTROLE DE MOUSSE

(30) Priority: 31.05.1999 EP 99110488
(43) Date of publication of application: 03.04.2002
(73) Proprietor: OLEON, 9940 Ertvelde (BE)
(72) Inventor: INGHELBRECHT, Kristien, B-1540 Herne (BE)
(74) Representative: Luys, Marie-José A.H.
(86) International application number: EP0004921
(87) International publication number: WO00073574

(56) References cited:
- US-A- 4 376 011
- US-A- 4 950 420
- DATABASE CHEMABS [Online] CHEMICAL ABSTRACTS SERVICE, COLUMBUS, OHIO, US; OKAMOTO, AKIRA ET AL: "Oil-in-water emulsions for use in defoaming of paper mill effluents and method for their stabilizing" retrieved from STN Database accession no. 130:268726 CA XP002119537 cited in the application & JP 11 076703 A (HAKUTO K. K., JAPAN) 23 March 1999 (1999-03-23)

## Description

### FIELD OF THE INVENTION

The present invention relates to the use of a foam controlling agent in a method for controlling the production of foam in a process. The method is particularly suitable for use in recycling processes, such as a process for removing ink from paper. The foam-controlling agent ensures that foam production is sufficiently high to aid in the removal of the unwanted substance, but not too high, thus preventing blockages and undesirable foam build-up. This leads to an improvement in efficiency, and reduces maintenance costs.

### BACKGROUND OF THE INVENTION

Many processes, including manufacturing and recycling processes, give rise to a build-up of foam as the process proceeds. This is due to agitation of the medium in which the process is carried out and is often made worse by the presence of substances which promote the formation of foam, but cannot be removed since they are essential to the process. Examples of such processes include paper manufacture and paper recycling.

It is well known to use agents such as surfactants or soap in a process for the removal of ink from waste paper to produce recycled paper. The surfactants are added to a liquid medium comprising the paper to promote the removal of ink particles from the surface of the paper to form a solution or suspension in the liquid medium. This is a typical de-inking procedure. These surfactants are the primarily responsible for the formation of foam on and in the liquid medium as the recycling process proceeds. A certain amount of foam is desirable, since it promotes the separation of ink particles from the surface of the paper. However, if too much foam is produced, this can lead to problems.

When too much foam is produced, foam knockdown showers need to be employed to remove the excess foam. This increases the quantity of water consumed by the process and is undesirable both in terms of cost and the detrimental impact on the environment. To prevent foam production causing bottlenecks in the production line, mechanical foam breakers are needed, which again increase the cost of the process and slow down production. Even if foam breakers are used they do not solve the problem of optimal production conditions. Excess foam can also lead to inconsistent ink removal and to fibre loss leading to a low recovery of the final recycled paper. Moreover in, for example, an effluent plant foam can contribute to solids carry over, which must be removed. Excess foam can additionally lead to pollution and can affect the safety of the process.

In order to overcome these problems it is known to add anti-foaming agents when carrying out a process that is subject to foaming. Particular attention has been focused on alkoxylated glycerides of fatty acids. Published patents and patent applications JP 03 000 881, JP 06 004 946, CA 2 047 182, CA 2 047 183, WO 92/07996, WO 92/07997, US 5 281 358 and JP 05 222 686 disclose the use of the above compounds as anti-foaming agents in processes for recycling paper.

In addition, JP 06 108 390 discloses the use of alkoxylated esters of mono or polycarboxylic acids and their anhydrides as anti-foaming agents. US 4,950,420 discloses antifoaming agents comprising polyhydric fatty acid esters. US 4,376,011 discloses fatty acid esters of mono-alcohols or polyols as antifoaming agents. US 5,718,801 discloses sorbitan esters as an alternative anti-foaming agent.

US 2 923 687 and US 3 198 744 are both concerned with paper manufacture. They disclose the use of polyhydric alcohols, lecithin, free fatty acids and fatty acid esters of polyoxypropylated glycerol as an anti-foaming agent. JP 11076703 discloses propylene glycol stearate, glycerin oleate and erythritol stearate as examples of defoaming agents.

A problem with known anti-foaming agents is that they suppress foam production throughout the entire process, so that the benefits of the presence of a moderate quantity of foam are not obtained.

It is an object of the present invention to overcome the problems associated with the above prior art. Specifically, it is an object of the present invention to provide methods using foam-controlling agents with superior properties to known anti-foaming agents. It is also an object of the invention to provide methods using foam-controlling agents which suppress foam production sufficiently to avoid the problems of excess foam, and yet allow sufficient foam to be produced to aid in the process.

### SUMMARY OF THE INVENTION

Accordingly, the present invention provides the use of a foam controlling agent comprising one or more of the following ester compounds (a)-(c) to control the formation of foam in a method for treating a substance :
(a) an ester formed from a saturated or unsaturated linear or branched aliphatic alcohol having from 1-18 carbon atoms, which alcohol may comprise one or more hydroxy groups, and a saturated or unsaturated linear or branched aliphatic monocarboxylic acid having from 6-24 carbon atoms, which carboxylic acid may be unsubstituted or substituted with one or more hydroxy groups;
(b) an ester formed by esterifying at least one of the hydroxy groups of a saturated or unsaturated linear or branched aliphatic polyol having from 2-6 carbon atoms, with a saturated or unsaturated linear or branched aliphatic monocarboxylic acid having from 6-24 carbon atoms, which carboxylic acid may be unsubstituted or substituted with one or more hydroxy groups, or by esterifying at least one of the hydroxy groups of the polyol with an oligomer formed from condensation of the monocarboxylic acid, wherein the polyol may be partially or fully esterified; and
(c) an ester formed by esterifying at least one of the hydroxy groups of a polyethyleneglycol having a molecular weight of up to 1500 and/or a polypropyleneglycol having a molecular weight of up to 1500 and/or methoxy polyethyleneglycol having a molecular weight of 1500, with a saturated or unsaturated linear or branched aliphatic monocarboxylic acid having from 6-24 carbon atoms, which carboxylic acid may be unsubstituted or substituted with one or more hydroxy groups, or by esterifying at least one of the hydroxy groups of the polyethyleneglycol and/or polypropyleneglycol with an oligomer formed from condensation of the monocarboxylic acid;
and wherein the foam controlling agent is capable of first suppressing foam formation by at least 25 % based on the foam height in comparison with the foam height of the same process in the absence of the foam-controlling agent and subsequently allowing foam to be formed.

The use of the present invention has the advantage of controlling foam formation so that the problems of excess foam formation described above are avoided. However, the agent used in the present method is not simply an anti-foaming agent, but is a foam-controlling agent. The agent is capable of controlling foam formation as the process proceeds, so that foam formation is first suppressed, but is subsequently allowed to increase. Thus the present process has the additional advantage that it is more efficient at removing unwanted substances during the process, as a result of the presence of a moderate amount of foam. An additional advantage are that the esters of the foam controlling agent are biodegradable. Thus the present foam-controlling agents pose no significant threat to the environment.

### DESCRIPTION OF THE PREFERRED EMBODIMENTS

The process wherein the foam controlling agent is used according to the present invention is not particularly limited, provided that it is a process which benefits from the addition of a foam-controlling agent. Preferably- the process is a process carried out in an aqueous phase. The process can be a method of manufacture or a method of recycling a substance. In a preferred embodiment the substance is a paper e.g. newspapers, magazines, books, computer printouts, coated paper, or plastics based papers. It is particularly preferred that the process is a process for manufacturing paper, or a process for recycling paper.

When the process wherein the foam controlling agent is used is a process for recycling, it preferably comprises separating a substance to be recycled from an unwanted substance. In this embodiment the substance to be recycled is preferably a paper and the unwanted substance is preferably a colouring agent, an ink, a dye, or one or more substances known in the paper recycling industry as stickies.

The monocarboxylic acids used to form the esters of the present foam-controlling agent preferably comprise from 12-22 carbon atoms. The monocarboxylic acids are typically natural fatty acids, such as those that are present in rapeseed, but the acids can also be ones not found in nature. In a particularly preferred embodiment, the acids are selected from oleic acid, linoleic acid, linolenic acid, palmitoleic acid, arachidic acid, ricinoleic acid, gadoleic acid or other unsaturated acids with 20 carbon atoms, erucic acid (colza) or other unsaturated acids with 22 carbon atoms or mixtures thereof.

The aliphatic alcohols used to form esters of type (a) have from 1-18 carbon atoms and may have 1 or more hydroxyl group substituents. Preferable aliphatic alcohols for use in the present invention include, methanol, isopropanol, butanol and isobutanol.

The polyols used to form esters of type (b) have from 2-6 carbon atoms. Particularly preferred polyols include glycerol, trimethylolpropane, sorbitan, sorbitol, pentaerythritol, neopentyl glycol and mixtures thereof.

The polyethyleneglycol and polypropyleneglycol used to form the esters of type (c) typically have a molecular weight of 1500 or less. In a preferred embodiment the polyethyleneglycol and polypropyleneglycol have a molecular weight of 600 or less, more preferably 200 or less.

The method of formation of the esters used in the present method is not particularly limited. However, the esters may be produced by standard text book methods of direct esterification and/or transesterification.

The quantity of anti-foaming agent used in the methods of the present invention is not particularly limited, provided that the foam-controlling property is not adversely affected. The quantity can be determined according to the individual process involved. Typical quantities of anti-foaming agent used are from 100-1000 ppm relative to the substance to be treated when dry.

The use according to the present invention typically involves substantially suppressing foam formation in an initial stage of a foam-producing process. Generally the height of foam on the surface of a liquid medium is lower in the initial stage of such a process when conducted according to the present use, compared with the same process conducted in the absence of an agent according to the present use. The height of the foam is at least 25 % lower and most preferably 50 % lower at a point in the initial stage of the process. This lowering in foam formation need not extend across the entire initial stage, but need only be attained at some point in the initial phase. Generally, the use allows the greatest foam suppression to take place at the beginning of the process, and as the initial stage proceeds the degree of foam reduction over a process not using a foam suppressant becomes progressively less. During the initial stage, the anti-foaming action of the agents used in the present invention, as determined by the height of foam mentioned above, is typically within a broadly similar range to that of other known anti-foaming agents such as Paracum ®-82/ES, when used at a similar concentration. The term 'initial stage' is not especially limited and generally means the stage of the process during which foam suppression occurs. Thus, the initial stage may be the first 50% of the total process time, or may be the first 25% or the first 10% of the process time, depending on the specific process involved.

The present use typically involves allowing substantial amounts of foam formation during the latter stage of a foam-producing process. The latter stage of the process is the remaining part of the process after the initial stage is complete. Allowing substantial amounts of foam formation may mean an amount of foam lower than that produced in conventional processes or may even include an amount of foam greater than that produced in conventional processes. When the process is conducted in the presence of the agent, the height of foam on the surface of the liquid medium is preferably at least 40 %, at least 60 % or at least 75 % of the height of foam in the absence of the agent (depending on the specific process involved) as measured after the process has been completed. More preferably, the height of foam in the presence of the agent is from 40-150 %, more preferably from 40-125 % of that in the absence of the agent as measured after the process has been completed. In some circumstances, the height of the foam may be at least 100 %, at least 150 % or at least 200 %, if the process is not adversely affected by larger quantities of foam being present in the final process stages. In this later stage the anti-foaming action of the agents used in the present invention is substantially weaker than that of other typical anti-foaming agents such as Paracum ®-82/ES. The reduced anti-foaming action of the present agents in the later stage ensures that a moderate amount of foam is produced, which aids the removal of unwanted substances in recycling processes for example.

The invention will now be described in further detail by way of example only, with reference to the following specific embodiments.

### Examples

In these examples, an aqueous phase comprising pulp was employed to provide conditions similar to those found in commercial de-inking processes.

1000 g of diluted pulp representing 1 wt. % of dry matter obtained from magazines was placed in a 5000 ml vessel. The vessel was calibrated in millimetres in order to measure the foam height at various time intervals, which is a mode of measuring the degree of foaming of a system and thus the anti-foaming and foam-controlling properties of a composition.

The required quantity of foam-controlling product was added to the vessel in each test run. Since the quantity of foam-controlling agent required is very low (100-1000 ppm based on the dry pulp) it was diluted (to a 1/10 concentration) with isopropyl alcohol (IPA).

The vessel was then placed under a floatation rotor and air introduced through an air inlet at a flow rate of 101/min to mimic normal floatation conditions.

The process was allowed to proceed for 5 minutes, with the foam height being measured every 15 seconds.

### Example 1 - effect of concentration

The following agents were tested according to the above procedure:
(1) Pulp
(2) Pulp (1) + 0.1 wt. % non-ionic surfactant Hartaflot® SE-6600 from Huntsman Corp., Canada Inc. P.O. Box 403, Guelph, ON N1H 6KS
(2a) Pulp (2) + 140 ppm glycerol monooleic acid ester
(2b) Pulp (2) + 280 ppm glycerol monooleic acid ester
(2c) Pulp (2) + 560 ppm glycerol monooleic acid ester

The results are shown below in Table 1.

**Table 1**

| Time/s | Foam Height/mm | | | | |
|---|---|---|---|---|---|
| | Pulp 1 | Pulp 2 | Pulp 2a | Pulp 2b | Pulp 2c |
| 15 | 55 | 70 | 35 | 20 | 15 |
| 30 | 53 | 105 | 35 | 25 | 18 |
| 45 | 55 | 120 | 38 | 30 | 20 |
| 60 | 58 | 140 | 38 | 30 | 25 |
| 75 | 55 | 145 | 40 | 33 | 28 |
| 90 | 53 | 140 | 48 | 38 | 28 |
| 105 | 50 | 130 | 55 | 40 | 28 |
| 120 | 45 | 125 | 60 | 40 | 30 |
| 150 | 48 | 115 | 68 | 42 | 35 |
| 180 | 45 | 95 | 75 | 45 | 40 |
| 240 | 40 | 90 | 90 | 65 | 45 |
| 300 | 38 | 60 | 90 | 105 | 65 |

Table 1 shows that the present foam-controlling agents have a clear anti-foaming property, shown by the reduction in foam formation as compared with the system comprising a surfactant. In addition, the present agent allows a moderate quantity of foam to be present after 5 minutes.

### Example 2 - effect of ester type

The following agents were tested according to the above procedure:
(1) Pulp
(2') Pulp (1) + 0.1 % Hartaflot® SE-6600
(3) Pulp (2') + 280 ppm Paracum®-82/ES (a propoxylated ester known as an anti-foaming agent) from KOLB AG. CH-8908 Hedingen-Switzerland
(4) Pulp (2') + 280 ppm of glycerol monooleic acid ester
(5) Pulp (2') + 280 ppm of a mixture of 25 % wt. of the methyl ester of linoleic acid and 65 % wt. of the methyl ester of oleic acid
(6) Pulp (2') +280 ppm of sorbitan monooleic acid ester
(7) Pulp (2') +280 ppm of polyethylene glycol (PEG) 200 mono oleic acid ester.

The results are shown below in Table 2.

**Table 2**

| Time/s | Foam Height/mm | | | | | | |
|---|---|---|---|---|---|---|---|
| | Pulp 1 | Pulp 2' | Pulp 3 | Pulp 4 | Pulp 5 | Pulp 6 | Pulp 7 |
| 15 | 55 | 80 | 20 | 22 | 25 | 28 | 30 |
| 30 | 53 | 105 | 22 | 27 | 30 | 35 | 35 |
| 45 | 55 | 115 | 28 | 30 | 32 | 40 | 40 |
| 60 | 58 | 120 | 30 | 32 | 38 | 43 | 42 |
| 75 | 55 | 130 | 30 | 38 | 38 | 45 | 45 |
| 90 | 53 | 132 | 32 | 38 | 40 | 48 | 45 |
| 105 | 50 | 135 | 35 | 40 | 42 | 50 | 45 |
| 120 | 45 | 135 | 35 | 40 | 45 | 55 | 45 |
| 150 | 48 | 115 | 40 | 45 | 50 | 58 | 45 |
| 180 | 45 | 105 | 42 | 50 | 55 | 60 | 40 |
| 240 | 40 | 95 | 40 | 65 | 58 | 65 | 48 |
| 300 | 38 | 80 | 40 | 85 | 70 | 80 | 55 |

Table 2 shows that the present foam-controlling agents have clearly superior foam-controlling properties to the known anti-foaming agent. This can be seen from pulps 4 to 7 treated according to the present invention, where foam formation resumes after about 100 s while for the commercial anti-foam product (pulp 3) foam formation remains at a low level throughout. In addition, the present agent allows a moderate quantity of foam to be present after 5 minutes, which is not observed when using the known anti-foaming agent. Thus, generally the present invention is particularly advantageous since it allows an increase in foam formation in the latter stages of the process. This is exemplified by a progressive increase in foam levels from 150 s onwards in the above Examples (pulps 4-7) which is not seen for pulp 1, pulp 2' or pulp 3.

## Claims

1. Use of a foam-controlling agent comprising one or more of the following ester compounds (a)-(c) to control the formation of foam in a method for treating a substance:
(a) an ester formed from a saturated or unsaturated linear or branched aliphatic alcohol having from 1-18 carbon atoms, which alcohol may comprise one or more hydroxy groups, and a saturated or unsaturated linear or branched aliphatic monocarboxylic acid having from 6-24 carbon atoms, which carboxylic acid may be unsubstituted or substituted with one or more hydroxy groups;
(b) an ester formed by esterifying at least one of the hydroxy groups of a saturated or unsaturated linear or branched aliphatic polyol having from 2-6 carbon atoms, with a saturated or unsaturated linear or branched aliphatic monocarboxylic acid having from 6-24 carbon atoms, which carboxylic acid may be unsubstituted or substituted with one or more hydroxy groups, or by esterifying at least one of the hydroxy groups of the polyol with an oligomer formed from condensation of the monocarboxylic acid, wherein the polyol may be partially or fully esterified; and
(c) an ester formed by esterifying at least one of the hydroxy groups of a polyethyleneglycol having a molecular weight of up to 1500 and/or a polypropyleneglycol having a molecular weight of up to 1500 and or methoxy polyethyleneglycol having a molecular weight of 1500, with a saturated or unsaturated linear or branched aliphatic monocarboxylic acid having from 6-24 carbon atoms, which carboxylic acid may be unsubstituted or substituted with one or more hydroxy groups, or by esterifying at least one of the hydroxy groups of the polyethyleneglycol and/or polypropyleneglycol with an oligomer formed from condensation of the monocarboxylic add;
wherein the foam-controlling agent is capable of first suppressing foam formation by at least 25 % based on the foam height in comparison with the foam height of the same process in the absence of the foam-controlling agent, and subsequently allowing foam to be formed.

2. Use according to claim 1, wherein the monocarboxylic acid comprises from 12-22 carbon atoms.

3. Use according to claim 1 or claim 2, wherein the monocarboxylic acid comprises an unsaturated monocarboxylic acid.

4. Use according to any preceding claim, wherein the monocarboxylic acid comprises a natural fatty acid.

5. Use according to any preceding claim, wherein the monocarboxylic acid oomptises oleic acid, linoleic acid, linolenic acid, palmitoleic acid, ricinoleic acid, gadoleic acid or other unsaturated acids with 20 carbon atoms, erucic acid or other unsaturated acids with 22 carbon atoms, or mixtures thereof.

6. Use according to any preceding claim, wherein the aliphatic alcohol comprises methanol, isopropanol, butanol, isobutanol, or mixtures thereof.

7. Use according to any preceding claim, wherein the polyol comprises glycerol, trimethylolpropane, sorbitan, sorbitol, pentaerythritol, neopentyl glycol and mixtures thereof.

8. Use according to any preceding claim, wherein only one of the hydroxyl groups of the polyol is esterified.

9. Use according to any preceding claim, wherein the molecular weight of the polyethyleneglycol and/or the molecular weight of the polypropyleneglycol is 200 or less.

10. Use according to any preceding claim, wherein the substance is a paper.

11. Use according to claim 10, which method further comprises contacting the paper with a de-inking agent.

12. Use according to claim 11, wherein the de-inking agent comprises a surfactant or a soap.

13. Use according to any preceding claim, wherein the method of treating a substance comprises a manufacturing or recycling process.

14. Use according to claim 13, wherein the method comprises removing a colouring agent, an ink, a dye, or one or more stickies from the substance.

## Patentansprüche

1. Verwendung eines schaumkontrollierenden Mittels, das eine oder mehrere der folgenden Esterverbindungen (a) bis (c) umfasst, zum Kontrollieren der Schaumbildung in einem Verfahren zur Behandlung einer Substanz:
(a) ein Ester, der aus einem gesättigten oder ungesättigten, linearen oder verzweigten, aliphatischen Alkohol mit 1 bis 18 Kohlenstoffatomen, wobei der Alkohol eine oder mehrere Hydroxygruppen umfasst, und einer gesättigten oder ungesättigten, linearen oder verzweigten, aliphatischen Monocarbonsäure mit 6 bis 24 Kohlenstoffatomen gebildet ist, wobei die Carbonsäure unsubstituiert oder mit einer oder mehreren Hydroxygruppen substituiert sein kann;
(b) ein Ester, der durch Veresterung von mindestens einer der Hydroxygruppen eines gesättigten oder ungesättigten, linearen oder verzweigten, aliphatischen Polyols mit 2 bis 6 Kohlenstoffatomen, mit einer gesättigten oder ungesättigten, linearen oder verzweigten, aliphatischen Monocarbonsäure mit 6 bis 24 Kohlenstoffatomen, wobei die Carbonsäure unsubstituiert oder mit einer oder mehreren Hydroxygruppen substituiert ist, oder durch Veresterung von mindestens einer der Hydroxygruppen des Polyols mit einem Oligomer gebildet ist, das durch die Kondensation der Monocarbonsäure gebildet ist, wobei das Polyol partiell oder vollständig verestert sein kann; und
(c) ein Ester, der durch Veresterung von mindestens einer der Hydroxygruppen eines Polyethylenglykols mit einem Molekulargewicht bis zu 1500 und/oder einem Polypropylenglykol mit einem Molekulargewicht bis zu 1500 und/oder Methoxypolyethylenglykol mit einem Molekulargewicht von 1500 mit einer gesättigten oder ungesättigten, linearen oder verzweigten, aliphatischen Monocarbonsäure mit 6 bis 24 Kohlenstoffatomen, wobei die Carbonsäure unsubstituiert oder mit einer oder mehreren Hydroxygruppen substituiert sein kann, oder durch Veresterung mindestens einer der Hydroxygruppen des Polyethylenglykols und/oder Polypropylenglykols mit einem Oligomer gebildet ist, das durch Kondensation der Monocarbonsäure gebildet ist;
wobei das schaumkontrollierende Mittel in der Lage ist, zuerst die Schaumbildung um mindestens 25 % zu unterdrücken, bezogen auf die Schaumhöhe im Vergleich mit der Schaumhöhe desselben Verfahrens in Abwesenheit des schaumkontrollierenden Mittels, und nachfolgend die Schaumbildung zuzulassen.

2. Verwendung nach Anspruch 1, wobei die Monocarbonsäure 12 bis 22 Kohlenstoffatome umfasst.

3. Verwendung nach Anspruch 1 oder Anspruch 2, wobei die Monocarbonsäure eine ungesättigte Monocarbonsäure umfasst.

4. Verwendung nach einem der vorhergehenden Ansprüche, wobei die Monocarbonsäure eine natürliche Fettsäure umfasst.

5. Verwendung nach einem der vorhergehenden Ansprüche, wobei die Monocarbonsäure Ölsäure, Linolsäure, Linolensäure, Palmito-oleinsäure, Ricinolsäure, Gadoleinsäure oder andere ungesättigte Säuren mit 20 Kohlenstoffatomen, Erucasäure oder andere ungesättigte Säuren mit 22 Kohlenstoffatomen oder Mischungen davon umfasst.

6. Verwendung nach einem der vorhergehenden Ansprüche, wobei der aliphatische Alkohol Methanol, Isopropanol, Butanol, Isobutanol oder Mischungen davon umfasst.

7. Verwendung nach einem der vorhergehenden Ansprüche, wobei das Polyol Glycerin, Trimethylolpropan, Sorbitan, Sorbit, Pentaerythrit, Neopentylglykol und Mischungen davon umfasst.

8. Verwendung nach einem der vorhergehenden Ansprüche, wobei nur eine der Hydroxylgruppen des Polyols verestert ist.

9. Verwendung nach einem der vorhergehenden Ansprüche, wobei das Molekulargewicht des Polyethylenglykols und/oder das Molekulargewicht des Polypropylenglykols 200 oder weniger beträgt.

10. Verwendung nach einem der vorhergehenden Ansprüche, wobei die Substanz ein Papier ist.

11. Verwendung nach Anspruch 10, wobei des Weiteren das Papier mit einem De-Inkingmittel kontaktiert wird.

12. Verwendung nach Anspruch 11, wobei das De-Inkingmittel ein Tensid oder eine Seife umfasst.

13. Verwendung nach einem der vorhergehenden Ansprüche, wobei das Verfahren zur Behandlung einer Substanz ein Fertigungs- oder Wiederverwertungsverfahren umfasst.

14. Verwendung nach Anspruch 13, wobei das Verfahren das Entfernen eines Färbungsmittels, einer Tinte, eines Farbstoffs oder einer oder mehreren klebrigen Mitteln aus der Substanz umfasst.

## Revendications

1. Utilisation d'un agent de contrôle de mousse comprenant un ou plusieurs des composés ester suivants (a)-(c) pour contrôler la formation de mousse dans un procédé de traitement d'une substance :
(a) un ester formé à partir d'un alcool aliphatique linéaire ou ramifié, saturé ou insaturé, comportant de 1 à 18 atomes de carbone, cet alcool pouvant comprendre un ou plusieurs groupes hydroxy, et d'un acide monocarboxylique aliphatique linéaire ou ramifié, saturé ou insaturé, comportant de 6 à 24 atomes de carbone, cet acide carboxylique pouvant être non substitué ou substitué par un ou plusieurs groupes hydroxy,
(b) un ester formé par estérification d'au moins un des groupes hydroxy d'un polyol aliphatique linéaire ou ramifié, saturé ou insaturé, comportant de 2 à 6 atomes de carbone, par un acide monocarboxylique aliphatique linéaire ou ramifié, saturé ou insaturé, comportant 6 à 24 atomes de carbone, cet acide carboxylique pouvant être non substitué ou substitué par un ou plusieurs groupes hydroxy, ou par estérification d'au moins un des groupes hydroxy du polyol par un oligomère formé par condensation de l'acide monocarboxylique, le polyol pouvant être partiellement ou totalement estérifié, et
(c) un ester formé par estérification d'au moins un des groupes hydroxy d'un polyéthylèneglycol présentant un poids moléculaire de jusqu'à 1500 et/ou d'un polypropylèneglycol présentant un poids moléculaire de jusqu'à 1500 et/ou d'un méthoxy polyéthylèneglycol présentant un poids moléculaire de 1500, par un acide monocarboxylique aliphatique linéaire ou ramifié, saturé ou insaturé, comportant de 6 à 24 atomes de carbone, cet acide carboxylique pouvant être non substitué ou substitué par un ou plusieurs groupes hydroxy, ou par estérification d'au moins un des groupes hydroxy du polyéthylèneglycol et/ou du polypropylèneglycol par un oligomère formé par condensation de l'acide monocarboxylique,
l'agent de contrôle de mousse étant capable de tout d'abord supprimer une formation de mousse d'au moins 25% sur base de la hauteur de mousse en comparaison de la hauteur de mousse du même procédé en l'absence de l'agent de contrôle de mousse, et ensuite de permettre la formation de mousse.

2. Utilisation suivant la revendication 1, dans laquelle l'acide monocarboxylique comprend de 12 à 22 atomes de carbone.

3. Utilisation suivant l'une des revendications 1 et 2, dans laquelle l'acide monocarboxylique comprend un acide monocarboxylique insaturé.

4. Utilisation suivant l'une quelconque des revendications précédentes, dans laquelle l'acide monocarboxylique comprend un acide gras naturel.

5. Utilisation suivant l'une quelconque des revendications précédentes, dans laquelle l'acide monocarboxylique comprend de l'acide oléique, de l'acide linoléique, de l'acide linoléique, de l'acide palmitoléique, de l'acide ricinoléique, de l'acide gadoléique ou d'autres acides insaturés comportant 20 atomes de carbone, de l'acide érucique ou d'autres acides insaturés comportant 22 atomes de carbone, ou leurs mélanges.

6. Utilisation suivant l'une quelconque des revendications précédentes, dans laquelle l'alcool aliphatique comprend du méthanol, de l'isopropanol, du butanol, de l'isobutanol ou leurs mélanges.

7. Utilisation suivant l'une quelconque des revendications précédentes, dans laquelle le polyol comprend du glycérol, du triméthylolpropane, du sorbitane, du sorbitol, du pentaérythritol, du néopentyl glycol et leurs mélanges.

8. Utilisation suivant l'une quelconque des revendications précédentes, dans laquelle seul un des groupes hydroxyle du polyol est estérifié.

9. Utilisation suivant l'une quelconque des revendications précédentes, dans laquelle le poids moléculaire du polyéthylènegtycol et/ou le poids moléculaire du polypropylèneglycol est de 200 ou moins.

10. Utilisation suivant l'une quelconque des revendications précédentes, dans laquelle la substance est un papier.

11. Utilisation suivant la revendication 10, dans laquelle le procédé comprend, en outre, une mise en contact du papier avec un agent de désencrage.

12. Utilisation suivant la revendication 11, dans laquelle l'agent de désencrage comprend un agent tensioactif ou un savon.

13. Utilisation suivant l'une quelconque des revendications précédentes, dans laquelle le procédé de traitement d'une substance comprend un procédé de fabrication ou de recyclage.

14. Utilisation suivant la revendication 13, dans laquelle le procédé comprend l'élimination d'un agent colorant, d'une encre, d'un pigment, ou d'un ou plusieurs agents gluants de la substance.
